# EUROPÄISCHE PATENTSCHRIFT

(11) **EP 0 628 607 B1**
(45) Veröffentlichungstag und Bekanntmachung des Hinweises auf die Patenterteilung: **08.12.1999**
(21) Anmeldenummer: 94108214.1
(22) Anmeldetag: 28.05.1994
(51) Int. Cl.: C09B 67/12, C09B 67/50, C09D 11/02

(54) **Naphthalocyanine**
Naphthalocyanine
Naphtalocyanine

(30) Priorität: 08.06.1993 DE 4318983
(43) Veröffentlichungstag der Anmeldung: 14.12.1994
(73) Patentinhaber: BASF Aktiengesellschaft, 67063 Ludwigshafen (DE)
(72) Erfinder: Sens, Benno, Dr., D-37250Netphen (DE); Carcia Espino, Andreas Carlos, Dr., D-67133 Maxdorf (DE); Albert, Bernhard, Dr., D-67133 Maxdorf (DE); Kipper, Juergen, Dr., D-76137 Karlsruhe (DE)

(56) Entgegenhaltungen:
- EP-A- 0 269 079
- EP-A- 0 384 470
- EP-A- 0 401 782
- EP-A- 0 553 614
- EP-A- 0 574 790

## Beschreibung

Die vorliegende Erfindung betrifft neue Naphthalocyanine der allgemeinen Formel I 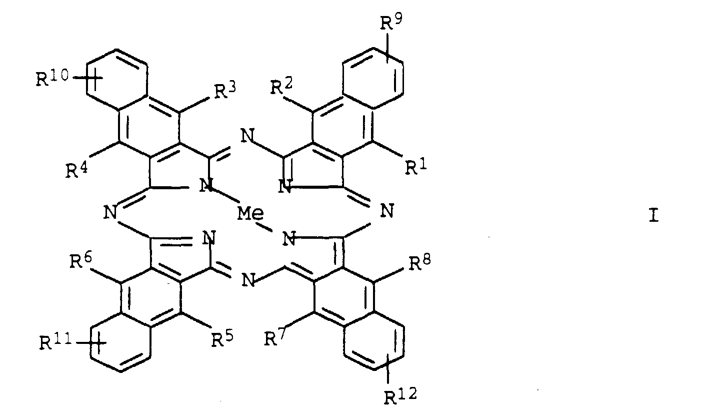 in der die Variablen folgende Bedeutung haben:
R¹, R², R³, R⁴, R⁵, R⁶, R⁷ und R⁸ unabhängig voneinander jeweils Wasserstoff; Hydroxy; C₁-C₂₀-Alkyl oder C₁-C₂₀-Alkoxy, deren Kohlenstoffketten jeweils durch 1 bis 4 Sauerstoffatome in Etherfunktion unterbrochen sein können und die durch Phenyl substituiert sein können;
R⁹, R¹⁰, R¹¹ und R¹² unabhängig voneinander jeweils Wasserstoff; Halogen; C₁-C₂₀-Alkyl oder C₁-C₂₀-Alkoxy, deren Kohlenstoffketten jeweils durch 1 bis 4 Sauerstoffatome in Etherfunktion unterbrochen sein können;
Me zwei Wasserstoffatome, zwei einbindige Metallatome oder ein zweibindiges Metallatom, das gegebenenfalls zur Valenzabsättigung weitere Substituenten trägt,
als Pigmente mit isometrischer Form der Teilchen und einer Teilchengrößenverteilung von 10 bis 300 nm.

Außerdem betrifft die Erfindung die Herstellung dieser Naphthalocyanine sowie ihre Verwendung zum Pigmentieren von Druckfarben, Lacken, Tinten und Kunststoffen sowie Druckfarben und Tinten, welche diese Naphthalocyanine als Pigmente enthalten.

Mit Hilfe moderner Geräte der Kommunikationstechnik gewinnt das sichere und schnelle Erfassen von Informationen eine immer stärkere Bedeutung. Dabei kommt dem automatischen, digitalen Einlesen von gedruckt, digital oder analog vorliegender Information eine besondere Rolle zu. Als Beispiel seien gedruckte Barcodes genannt, die mit geeigneten Lichtquellen und Detektoren abgetastet und gelesen werden können.

In diesem Zusammenhang sind im Infrarotbereich absorbierende Farbmittel, die im sichtbaren Bereich schwache bzw. keine Absorption zeigen, von besonderem Interesse. Weitere Einsatzmöglichkeiten für diese Farbmittel sind neben dem Verpackungsdruck allgemein insbesondere der Wertpapierdruck. Darunter wird derjenige Sektor verstanden, der Wertpapiere, Aktien, Securitydrucke aller Art und darüber hinaus Identifikationskarten, Bahn- und Flugtickets, Lotterielose, Sicherheitsmerkmale auf Etiketten und Berechtigungsscheine aller Art umfaßt.

Die für diese Zwecke eingesetzten Farbmittel müssen je nach Anwendung eine Reihe von unterschiedlichen Anforderungen erfüllen. Als essentielle Eigenschaften seien z.B. hohe Lichtechtheit sowie schmalbandige IR-Absorption und gute Transparenz im sichtbaren Bereich genannt.

Werden als Farbmittel im Anwendungsmedium gelöst vorliegende Farbstoffe verwendet, so bereiten deren mangelnde Echtheiten, wie mangelnde Lösungsmittel- und Migrationsechtheit, insbesondere auch mangelnde Lichtechtheit, oft Probleme.

In dieser Hinsicht vermögen auch die aus der GB-A-2 168 372 und der älteren, nicht vorveröffentlichten DE-A 42 02 038 bekannten Farbstoffe auf der Basis von Naphthalocyaninen nicht vollständig zu überzeugen.

In diesem Sinne ist das Dokument EP-A-0 401 782 besonders zu berücksichtigen. Dieses Dokument offenbart neue Verbindungen aus Titaniumphthalocyanine

Einer Anwendung als meist lichtechteres, ungelöstes Pigment steht die für den Druckfarben- und Lackbereich meist ungenügende Teilchenform der Farbmittel entgegen.

Der Erfindung lag daher die Aufgabe zugrunde, Farbmittel bereitzustellen, die den genannten Anforderungen gerecht werden und sich insgesamt durch gute Anwendungseigenschaften auszeichnen.

Demgemäß wurden die Naphthalocyanine der eingangs definierten Formel I als Pigmente mit isometrischer Form der Teilchen und einer Teilchengrößenverteilung von 10 bis 300 nm gefunden.

Weiterhin wurde ein Verfahren zur Herstellung dieser Naphthalocyanine durch
a) Trockenmahlung des bei der Synthese anfallenden Rohprodukts und gegebenenfalls
b) anschließende Behandlung des gemahlenen Produkts mit einer im wesentlichen aus Wasser und einem organischen Lösungsmittel bestehenden Flüssigkeit in der Wärme
gefunden.

Zusätzlich wurde ein Verfahren zur Herstellung der Naphthalocyanine durch
c) Naßmahlung des bei der Synthese anfallenden Rohprodukts in einer im wesentlichen aus Wasser und einem organischen Lösungsmittel bestehenden Flüssigkeit und gegebenenfalls
d) anschließende Wärmebehandlung der bei der Mahlung erhaltenen Suspension
gefunden.

Außerdem wurde die Verwendung der Naphthalocyanine zur Pigmentierung von Druckfarben, Lacken, Tinten und Kunststoffen gefunden.

Nicht zuletzt wurden Druckfarben und Tinten, welche die Naphthalocyanine als Pigmente und ein polares Bindemittelsystem enthalten, gefunden.

Bevorzugte Ausgestaltungen der Erfindung sind den Unteransprüchen zu entnehmen.

Geeignete Reste R¹ bis R⁸ sind Wasserstoff und vor allem Hydroxy. Weiterhin geeignet sind C₁-C₂₀-Alkylgruppen und C₁-C₂₀-Alkoxygruppen, deren Kohlenstoffe jeweils durch 1 bis 4 Sauerstoffatome in Etherfunktion unterbrochen sein können. Dabei sind C₁-C₄-Alkylgruppen und C₁-C₂₀-Alkoxygruppen bevorzugt sowie C₁-C₁₀-Alkoxygruppen besonders bevorzugt.

Als Beispiele für geeignete Alkylreste R¹ bis R⁸ sein genannt:
Methyl, Ethyl, Propyl, Isopropyl, Butyl, Isobutyl, sec-Butyl, tert-Butyl, Pentyl, Isopentyl, Neopentyl, tert-Pentyl, Hexyl, 2-Methylpentyl, Heptyl, Octyl, 2-Ethylhexyl, Isooctyl, Nonyl, Isononyl, Decyl, Isodecyl, Undecyl, Dodecyl, Tridecyl, 3,5,5,7-Tetramethylnonyl, Isotridecyl (die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436), Tetradecyl, Pentadecyl, Hexadecyl, Heptadecyl, Octadecyl, Nonadecyl, Eicosyl, 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- und 3-Propoxypropyl, 2- und 3-Butoxypropyl, 2- und 4-Methoxybutyl, 2- und 4-Ethoxybutyl, 2- und 4-Propoxybutyl, 2- und 4-Butoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 4,8-Dioxadecyl, 3,6,8-Trioxadecyl, 3,6,9-Trioxaundecyl, 3,6,9,12-Tetraoxatridecyl und 3,6,9,12-Tetraoxatetradecyl.

Geeignete Alkoxyreste R¹ bis R⁸ sind beispielsweise:
Methoxy, Ethoxy, Propoxy, Isopropoxy, Butoxy, Isobutoxy, Pentyloxy, Hexyloxy, Heptyloxy, Octyloxy, 2-Ethylhexyloxy, Isooctyloxy, Nonyloxy, Isononyloxy, Decyloxy, Isodecyloxy, Undecyloxy, Dodecyloxy, Tridecyloxy, Isotridecyloxy, Tetradecyloxy, Pentadecyloxy, Hexadecyloxy, Heptadecyloxy, Octadecyloxy, Nonadecyloxy, Eicosyloxy, 2-Methoxyethoxy, 2-Ethoxyethoxy, 2-Propoxyethoxy, 2-Isopropoxyethoxy, 2-Butoxyethoxy, 2- und 3-Methoxypropoxy, 2- und 3-Ethoxypropoxy, 2- und 3- Propoxypropoxy, 2- und 3-Butoxypropoxy, 2- und 4-Methoxybutoxy, 2- und 4-Ethoxybutoxy, 2- und 4-Propoxybutoxy, 2- und 4-Butoxybutoxy, 3,6-Dioxaheptyloxy, 3,6-Dioxaoctyloxy, 4,8-Dioxanonyloxy, 3,7-Dioxaoctyloxy, 3,7-Dioxanonyloxy, 4,7-Dioxaoctyloxy, 4,7-Dioxanonyloxy, 4,8-Dioxadecyloxy, 3,6,8-Trioxadecyloxy, 3,6,9-Trioxaundecyloxy, 3,6,9,12-Tetraoxatridecyloxy und 3,6,9,12-Tetraoxatetradecyloxy.

Beispiele für durch Phenyl substituierte Alkyl- und Alkoxygruppen sind Benzyl, 1- und 2-Phenylethyl, Benzyloxy und 1- und 2-Phenylethoxy.

Die Reste R¹ bis R⁸ können gleich oder verschieden sein. Bevorzugt ist mindestens einer von ihnen von Wasserstoff verschieden. Besonders bevorzugt handelt es sich um gleiche Alkyl- und insbesondere Alkoxyreste.

Geeignete Reste R⁹ bis R¹² sind ebenfalls die oben aufgeführten und gegebenenfalls durch Sauerstoffatome in Etherfunktion unterbrochenen C₁-C₂₀-Alkyl- und Alkoxygruppen, wobei die gleichen Bevorzugungen gelten. Weiterhin geeignet sind Halogen wie Fluor, Chlor und Brom und insbesondere Wasserstoff.

Als Zentralatome Me eignen sich neben Wasserstoff ein- und zweibindige Metallatome, die zur Valenzabsättigung weitere Substituenten tragen können.

Bevorzugte Metallatome sind zum Beispiel Lithium, Kupfer, Magnesium, Zink, Nickel, Zinn, Mangan, Indium, Vanadin, Titan und Aluminium, wobei die mehr als zweiwertigen, in der Regel drei- oder vierwertigen, Metallatome weitere Substituenten tragen, wie Halogen, vor allem Chlor, Brom und Iod, Hydroxy, Sauerstoff, Alkoxy, Alkylamino, Alkylthio und Alkanoyloxy, deren Alkylketten üblicherweise 1 bis 10 Kohlenstoffatome aufweisen und durch Sauerstoffatome in Etherfunktion unterbrochen sein können. Geeignete Beispiele sind hier TiO, VO und AlCl.

Besonders bevorzugte Zentralatome Me sind Kupfer und vor allem zwei Wasserstoffatome, d.h. die metallfreien Naphthalocyaninpigmente I sind besonders hervorzuheben.

Die erfindungsgemäßen Naphthalocyanine I zeichnen sich durch isometrische Teilchengestalt aus und haben in der Regel Teilchengrößen von 10 bis 300 nm, vorzugsweise 20 bis 100 nm.

Die Naphthalocyanine I sind vorteilhaft nach dem erfindungsgemäßen Herstellverfahren durch Veredelung der bei der Synthese anfallenden Produkte, die als unregelmäßig geformte Teilchen mit Teilchengrößen von bis zu 5 µm vorliegen, zur Agglomerisierung neigen und nicht als Pigmente eingesetzt werden können, zu erhalten. Die Synthese kann dabei, wie in der älteren deutschen Patentanmeldung P 43 10 371.5 oder der GB-B-2 168 372 beschrieben, durch Veretherung von l,4-Dihydroxy-2,3-dicyanonaphthalinen, Bildung der metallfreien Naphthalocyanine und gegebenenfalls anschließende Metallisierung erfolgt sein.

Bei dem erfindungsgemäßen Veredelungsverfahren werden die Rohprodukte einer aktivierenden Mahlung (Schritt a)) und vorzugsweise einer anschließenden Formierung durch Behandlung mit einem Gemisch aus Wasser und einem organischen Lösungsmittel in der Wärme (Schritt b)) (Variante 1) oder vorteilhaft (Variante 2) direkt einer Naßmahlung (Schritt c)) in Gegenwart einer im wesentlichen aus Wasser und einem organischen Lösungsmittel bestehenden flüssigen Phase, gegebenenfalls mit anschließender Wärmebehandlung der bei der Mahlung erhaltenen Suspension (Schritt d)), unterzogen.

Diese Art der Pigmentveredelung ist zwar an sich bekannt und für Kupferphthalocyanin und chlorierte Kupferphthalocyanine z.B. in der US-A-2 857 400 und der DE-A-16 19 568 beschrieben. Es war jedoch nicht zu erwarten, daß sie auch bei den erfindungsgemäßen Naphthalocyaninen, die durch die Löslichkeit erhöhende Gruppen substituiert sind und in anderer Form als die unlöslichen Phthalocyaninpigmente kristallisieren, erfolgreich eingesetzt werden kann.

Die Trockenmahlung (Schritt a) der Variante 1) wird zweckmäßigerweise in einer Kugelmühle durchgeführt. Als Mahlkörper eignen sich beispielsweise Stahlkugeln, Porzellankugeln, Kugeln aus Silicium/Aluminium/Zirkonoxid, die in der Regel Durchmesser von 2 bis 5 cm haben. Für kleinere Ansätze können auch Stahl-Laborschwingmühlen oder Porzellanmühlen auf Rollbrettern verwendet werden. Zweckmäßig ist ein Füllgrad der Mühle mit Pigment und Mahlkörpern von 1/4 bis 1/2, bevorzugt um 1/3.

Die Mahldauer beträgt in der Regel 1 bis 15 h. Dabei wird zweckmäßigerweise eine Drehzahl verwendet, die 60 bis 70 % der kritischen Drehzahl ausmacht.

In der Regel werden schon bei der Trockenmahlung Naphthalocyanine mit sehr guter Pigmentqualität erhalten, die Teilchengrößen von 10 bis 40 nm aufweisen. Eine weitere Steigerung der Pigmentqualität kann durch zusätzliche Formierung (Schritt b)) erzielt werden, die isometrische, meist würfelförmige Teilchen mit einer engen Teilchengrößenverteilung von etwa 40 bis 120 nm ergibt. Je nach Anwendungszweck sind entweder die nur gemahlenen oder die zudem formierten Produkte vorzuziehen.

Die Formierung (Schritt b) der Variante 2) wird üblicherweise so vorgenommen, daß das gemahlene Produkt unter Rühren in einem Gemisch aus Wasser und einem organischen Lösungsmittel auf eine Temperatur von 50°C bis zur Rückflußtemperatur erhitzt wird. Diese Behandlung dauert im allgemeinen 0,5 bis 3 h. Das Endprodukt kann anschließend nach Abkühlen und Zugabe von Wasser durch Abfiltrieren isoliert und getrocknet werden.

Als organische Lösungsmittel eignen sich insbesondere aliphatische Alkohole, wie C₃-C₁₂-Alkohole, besonders C₃-C₈-Alkanole wie Ethanol, Propanol, Isopropanol, 2-Ethylhexanol und vor allem Butanol und Isobutanol, aliphatische Etheralkohole, besonders C₂-C₃-Alkylenglykolmono-C₂-C₄-alkylether wie Ethylenglykolmonoethyl-, -propyl- und vor allem -butylether und Methyldiglykol (Diethylenglykolmonomethylether), auch Propylenglykolmonomethylether sowie Tetrahydrofuran. Selbstverständlich können auch Lösungsmittelgemische eingesetzt werden.

Das Gewichtsverhältnis von Wasser zu organischem Lösungsmittel ist innerhalb weiter Grenzen variierbar, üblicherweise beträgt es etwa 10:1 bis 1:1, bevorzugt 2,5:1 bis 1,5:1.

Pro g zu behandelndes Naphthalocyanin werden in der Regel 2 bis 10, vorzugsweise 3 bis 5 g flüssige Phase eingesetzt.

Dem Formierungsgemisch können weitere übliche Zusätze wie Tenside, Harze, insbesondere Kolophonium und dessen Derivate wie auch die Umsetzungsprodukte mit Malein- oder Fumarsäureanhydrid und Alkylharze, sowie Säuren oder Laugen zugegeben werden.

Die Temperatur in Schritt b) wird durch die Wahl des Lösungsmittelgemisches bestimmt. Üblicherweise beträgt sie 50 bis 100°C.

In Abhängigkeit vom jeweiligen Pigment kann unter Umständen auch auf den Formierungsschritt b) verzichtet werden. Das ist insbesondere dann der Fall, wenn das in der Druckfarbe eingesetzte Lösungsmittelsystem eine Rekristallisation des Pigments bewirkt und die Formierung automatisch bei der Herstellung der Druckfarbe erfolgt.

Die Naphthalocyanine I können vorteilhaft auch nach der Variante 2 des erfindungsgemäßen Herstellungsverfahrens erhalten werden, bei der direkt eine Naßmahlung (Schritt c)), gegebenenfalls mit nachfolgender Formierung (Schritt d)), erfolgt.

Die Naßmahlung (Schritt c)) wird in Gegenwart einer im wesentlichen aus Wasser und organischem Lösungsmittel bestehenden flüssigen Phase vorgenommen.

Als organische Lösungsmittel eignen sich hierbei die bereits für die Formierung b) genannten Lösungsmittel, wobei Ethylenglykolmonobutylether besonders bevorzugt ist.

Das Gewichtsverhältnis von Wasser zu organischem Lösungsmittel ist auch hier innerhalb weiter Grenzen variierbar, üblicherweise beträgt es etwa 40:1 bis 2:1, vorzugsweise 20:1 bis 5:1.

Pro g zu mahlendes Naphthalocyanin werden in der Regel 4 bis 25, vorzugsweise 6 bis 10 g flüssige Phase eingesetzt.

Die Naßmahlung wird zweckmäßigerweise in einer Rührwerksmühle durchgeführt. Geeignete Mahlkörper sind z.B. Kugeln aus Silicium/Aluminium/Zirkonoxid, die in der Regel Durchmesser von 0,2 bis 0,6 mm, bevorzugt 0,3 bis 0,4 mm, haben.

Die Mahldauer beträgt in der Regel 0,5 bis 0,8 h, vorzugsweise 1,5 bis 3 h, bei einem Mahlgutdurchsatz von üblicherweise 200 bis 600 kg/h, besonders 300 bis 500 kg/h. Günstige spezifische Leistungen liegen im allgemeinen bei 1 bis 8, bevorzugt 1,5 bis 3 kWh/kg trockenes Pigment.

Die Naßmahlung kann sowohl bei Raumtemperatur (unter Außenkühlung) als auch in der Wärme erfolgen. Geeignete Temperaturen betragen in der Regel 20 bis 90°C, vorzugsweise 30 bis 70°C.

Insbesondere bei niedrigen Mahltemperaturen kann es von Vorteil sein, einen Formierungsschritt d) anzuschließen, bei dem die bei der Mahlung erhaltene Suspension einer Wärmebehandlung (etwa 50°C bis Rückflußtemperatur, im allgemeinen 0,5 bis 3 h) unterzogen wird, und so, falls gewünscht, die Pigmentteilchengröße zu erhöhen.

Pigmente mit Teilchengrößen von etwa 40 bis 100 nm, also grobteiligere Produkte, können jedoch auch direkt hergestellt werden, indem bei höherer Temperatur gemahlen wird.

Über die Temperatur bei der Mahlung kann also in einfacher Weise die Pigmentteilchengröße gesteuert werden.

Die erfindungsgemäßen Naphthalocyanine können aufgrund ihrer günstigen Teilchengestalt in Pigmentform für viele Anwendungszwecke eingesetzt werden und zeichnen sich dabei durch hervorragende Anwendungseigenschaften aus. Sie weisen eine starke, schmalbandige Absorption im IR-Bereich bei etwa 750 bis 950 nm und gleichzeitig gute Transparenz im sichtbaren Bereich auf und haben ausgezeichnete Echtheiten, insbesondere auch Lichtechtheiten und Migrationsechtheiten.

Die Naphthalocyanine I sind sehr gut zur Herstellung von Druckfarben, z.B. für den Flexodruck und den Tiefdruck, Tinten, vor allem für Ink-Jet-Verfahren, und Lacken sowie zur Pigmentierung von Kunststoffen (z.B. PMMA) geeignet.

Zur Herstellung von Druckfarben eignen sich dabei insbesondere polare Bindemittelsysteme, z.B. Gemische von Polyacrylat, Wasser und Isopropanol, aber auch Gemische von Nitrocellulose, Ethanol und Essigester, sowie Gemische von Polyamidharzen und Alkoholen (Eurelon®, Schering).

Zur Herstellung von Tinten können die Naphthalocyanine I beispielsweise, wie in der DE-A-41 15 608 beschrieben, als wäßrige oder alkoholische Dispersionen eingesetzt werden.

### Beispiele

Octabutoxynaphthalocyanin (Pigment A) und Octabutoxykupfernaphthalocyanin (Pigment B) 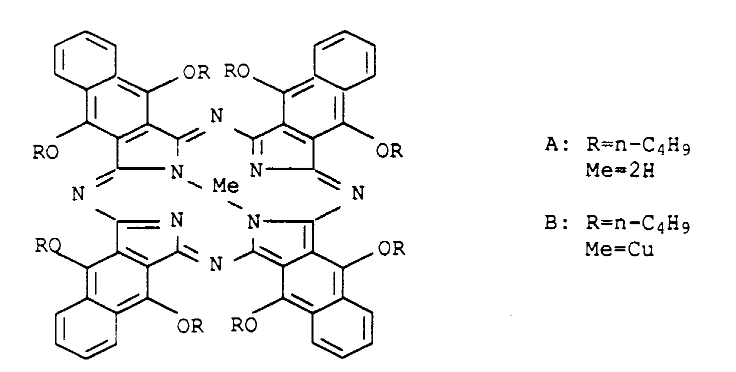 wurden unter Anwendung des erfindungsgemäßen Verfahrens in eine für die Anwendung als Pigment geeignete Form überführt. Als Rohware wurden dabei die gemäß Beispiel 8 bzw. Beispiel 11 der älteren deutschen Patentanmeldung P 43 10 371.5 hergestellten Naphthalocyanine eingesetzt, die unregelmäßige Teilchenform und Teilchengrößen bis etwa 5 µm aufweisen.

Dazu wurden sie nach der Variante 1 einer Trockenmahlung (Schritt a)) und teilweise auch einer Formierung (Schritt b)) oder nach der Variante 2 einer Naßmahlung (Schritt c)) und teilweise einer anschließenden Formierung (Schritt d)) unterzogen.

### Variante 1:

### a) Aktivierende Mahlung:

100 g Pigment wurden jeweils in einer Porzellanmühle auf Rollbrett (Fassungsvermögen 5 l) mit 3 kg Stahlkugeln (Durchmesser 3 cm) 10 h gemahlen.

### b) Formierung:

100 g des in Schritt a) erhaltenen, gemahlenen Pigments wurden in einem Gemisch aus 200 ml Wasser und 90 ml Isobutanol unter Erhitzen auf Rückfluß t₁h gerührt. Nach Abkühlen und Zugabe von 2000 ml Wasser wurde das Pigment abfiltriert und im Umlufttrockenschrank bei 70°C getrocknet.

### Variante 2:

### c) Naßmahlung:

Eine Mischung aus 4,5 kg Pigment, 4,5 kg Ethylenglykolmonobutylether und 31,5 kg Wasser wurde nach Vorzerkleinerung in einer Rotormühle in einer Rührwerksmühle (Netzsch ZWM 23; Sieb 100 µm, Mahlkörper aus Silicium/Aluminium/Zirkonoxid mit 0,3 bis 0,4 mm Durchmesser) bei einem Durchsatz von 480 kg/h und einer spezifischen Leistung von 2 kWh/kg Pigment 2 h bei T°C gemahlen. Das Pigment wurde, gegebenenfalls nach Abkühlen, abfiltriert, mit Wasser gewaschen und im Umlufttrockenschrank bei 70°C getrocknet oder direkt in Form der anfallenden Suspension einer Formierung unterzogen.

### d) Formierung:

Die in Schritt c) erhaltene Suspension wurde t₂h unter Rückfluß in einem Kessel erhitzt. Nach Abkühlen wurde das Pigment wie unter c) beschrieben isoliert.

Weitere Einzelheiten zu diesen Versuchen sind den Tabellen 1 und 2 zu entnehmen.

Zur Bestimmung der Absorptionsmaxima wurden die behandelten Pigmente und zum Vergleich auch die Rohwaren (VA und VB) jeweils 12 gew.-%ig in einem Skandex-Mischer 30 bis 120 min (je nach Pigment und Bindemittel) in folgenden Bindemittellösungen angerieben:
1. Nicht vernetztes Polyacrylat (Joncryl® 679; Johnson)/Wasser/Isopropanol/konzentrierter Ammoniak
   (Gewichtsverh. 25:50:20:6) =̂ PWI
2. Nitrocellulose (Nitrocellulose A 400, Stickstoffgehalt 10,9-11,3 %, niedrigviskos; Wolff, Walsrode)/Ethanol/Essigsäureethylester
   (Gewichtsverh. 17,5:62,5:20) =̂ NEE

Die 12 %igen Konzentratanreibungen wurden mit der jeweiligen Bindemittellösung auf 2 % verdünnt und mit einer 12 µm-Rakel auf Acetatfolie aufgetragen. Nach dem Verdunsten der Lösemittel blieben Schichten von 2 bis 3 µm Dicke zurück.

Weiterhin wurden die erhaltenen Pigmente zur Herstellung einer Offsetdruckfarbe 15 gew. -%ig in einem Offset-Firnis auf Mineralölbasis (oxidativtrocknend, ohne Lösungsmittel; =̂ OFS) durch 3 Passagen im Dreiwalzenstuhl (10 bar) dispergiert.

Die 15 %igen Pasten wurden anschließend mit weiterem Bindemittel auf 0,3 % verdünnt und mit einer 50 µm-Spiralrakel auf Acetatfolie aufgetragen.

Die Absorptionsspektren an diesen Proben wurden in Transmission gemessen. Die Ergebnisse dieser Messungen sind in den Tabellen 1 und 2 aufgeführt.

**Tabelle 1**

| Bsp. | Pigment | Formierung t₁h | Teilchengrößen [nm] | Bindemittel | Absorptionsmaxima: λₘₐₓ [nm]/Extinktion |
|---|---|---|---|---|---|
| 1 | A | - | 10-20¹) 40-120²) | PWI | 891/1,20; 795/0,48; 480/0,33 |
| 2 | A | 2 | 40-120 | PWI | 925/1,21; 890/1,31; 795/0,57; 480/0,36 |
| 3 | VA | - | 20-2000 | PWI | 919/0,69; 898/0,69; 793/0,37; 481/0,31 |
| 4 | A | - | 10-20¹) 40-120²) | NEE | 940/1,10; 795/0,42; 483/0,44 |
| 5 | A | 2 | 40-120 | NEE | 938/1,07; 794/0,46; 483/0,37 |
| 6 | VA | - | 20-2000 | NEE | 947/0,55; 796/0,30; 490/0,29 |
| 7 | B | - | 20-40 | PWI | 879/1,62; 786/0,59; 495/0,33 |
| 8 | B | 0,5 | 30-80 | PWI | 875/1,31; 785/0,55; 495/0,31 |
| 9 | VB | - | 40-500 | PWI | 887/0,65; 785/0,29; 497/0,28 |
| 10 | B | - | 20-40 | NEE | 924/1,18; 785/0,57; 498/0,46 |
| 11 | B | 0,5 | 30-80 | NEE | 921/1,12; 785/0,53; 498/0,41 |
| 12 | VB | - | 40-500 | NEE | 919/0,38; 786/0,26; 502/0,27 |

| | | | | | |
|---|---|---|---|---|---|
| ¹) als Pulver vor der Druckfarbenherstellung | | | | | |
| ²) in der Druckfarbe nach der Druckfarbenherstellung | | | | | |

**Tabelle 2**

| Bsp. | Pigment | Mahltemperatur T[°C] | Formierung t₂h | Teilchengrößen [nm] | Bindemittel | Absorptionsmaxima: λₘₐₓ [nm]/Extinktion |
|---|---|---|---|---|---|---|
| 13 | B | 35 | - | 20- 60 | PWI | 880/1,30; 788/0,53; 479/0,28 |
| 14 | B | 35 | 3 | 40-100 | PWI | 911/1,01; 889/1,02; 787/0,48; 481/0,30 |
| 15 | B | 70 | - | 40-100 | PWI | 917/1,08; 787/0,50; 481/0,31 |
| 16 | B | 35 | - | 20- 60 | NEE | 909/1,11; 785/0,51; 482/0,31 |
| 17 | B | 35 | 3 | 40-100 | NEE | 912/1,15; 785/0,53; 481/0,33 |
| 18 | B | 70 | - | 40-100 | NEE | 918/1,17; 785/0,56; 481/0,36 |
| 19 | B | 35 | - | 20- 60 | OFS | 858/1,08; 801/0,31; 478/0,16 |
| 20 | B | 35 | 3 | 40-100 | OFS | 859/0,83; 807/0,26; 478/0,15 |
| 21 | B | 70 | - | 40-100 | OFS | 873/1,07; 792/0,36; 479/0,20 |

## Patentansprüche

1. Naphthalocyanine der allgemeinen Formel I 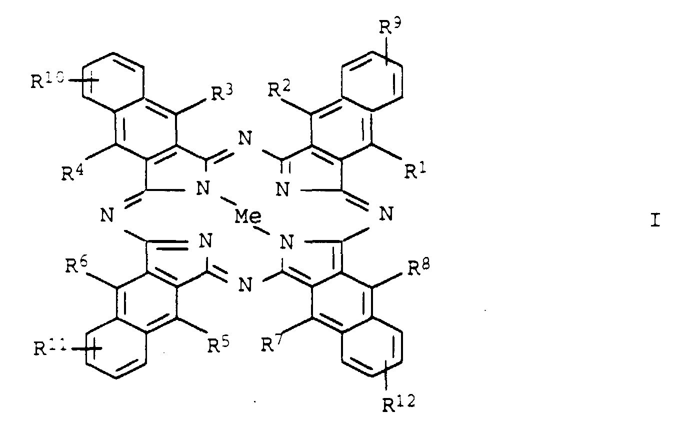 in der die Variablen folgende Bedeutung haben:
R¹, R², R³, R⁴, R⁵, R⁶, R⁷ und R⁸ unabhängig voneinander jeweils Wasserstoff; Hydroxy; C₁-C₂₀-Alkyl oder C₁-C₂₀-Alkoxy, deren Kohlenstoffketten jeweils durch 1 bis 4 Sauerstoffatome in Etherfunktion unterbrochen sein können und die durch Phenyl substituiert sein können;
R⁹, R¹⁰, R¹¹ und R¹² unabhängig voneinander jeweils Wasserstoff; Halogen; C₁-C₂₀-Alkyl oder C₁-C₂₀-Alkoxy, deren Kohlenstoffketten jeweils durch 1 bis 4 Sauerstoffatome in Etherfunktion unterbrochen sein können;
Me zwei Wasserstoffatome, zwei einbindige Metallatome oder ein zweibindiges Metallatom, das gegebenenfalls zur Valenzabsättigung weitere Substituenten trägt,
als Pigmente mit isometrischer Form der Teilchen und einer Teilchengrößenverteilung von 10 bis 300 nm.

2. Naphthalocyanine der allgemeinen Formel I nach Anspruch 1, in der die Variablen folgende Bedeutung haben:
R¹, R², R³, R⁴, R⁵, R⁶, R⁷ und R⁸ unabhängig voneinander Wasserstoff; Hydroxy; C₁-C₄-Alkyl oder C₁-C₂₀-Alkoxy;
R⁹, R¹⁰, R¹¹ und R¹² Wasserstoff;
Me zweimal Wasserstoff, zweimal Lithium, Magnesium, Zink, Kupfer, Nickel, VO, TiO oder AlCl.

3. Naphthalocyanine der allgemeinen Formel I nach Anspruch 1, in der die Variablen folgende Bedeutung haben:
R¹, R², R³, R⁴, R⁵, R⁶, R⁷ und R⁸ unabhängig voneinander Hydroxy oder C₁-C₂₀-Alkoxy;
R⁹, R¹⁰, R¹¹ und R¹² Wasserstoff;
Me zweimal Wasserstoff, zweimal Lithium, Magnesium, Zink, Kupfer, Nickel, VO, TiO oder AlCl.

4. Naphthalocyanine der allgemeinen Formel I nach Anspruch 1, in der die Variablen folgende Bedeutung haben:
R¹, R², R³, R⁴, R⁵, R⁶, R⁷ und R⁸ unabhängig voneinander C₁-C₁₀-Alkoxy;
R⁹, R¹⁰, R¹¹ und R¹² Wasserstoff;
Me zweimal Wasserstoff oder Kupfer.

5. Naphthalocyanine nach den Ansprüchen 1 bis 4, erhältlich durch
a) Trockenmahlung des bei der Synthese anfallenden Rohprodukts und gegebenenfalls
b) anschließende Behandlung des gemahlenen Produkts mit einer im wesentlichen aus Wasser und einem organischen Lösungsmittel bestehenden Flüssigkeit in der Wärme oder
c) Naßmahlung des bei der Synthese anfallenden Rohprodukts in einer im wesentlichen aus Wasser und einem organischen Lösungsmittel bestehenden Flüssigkeit und gegebenenfalls
d) anschließende Wärmebehandlung der in c) erhaltenen Suspension.

6. Naphthalocyanine nach Anspruch 5, bei denen als organische Lösungsmittel in Schritt b) oder c) C₃-C₁₂-Alkohole, C₂-C₃-Alkylenglykolmono-C₂-C₄-alkylether oder Tetrahydrofuran eingesetzt werden.

7. Verfahren zur Herstellung der Naphthalocyanine der Formel I gemäß Anspruch 1 mit isometrischen Teilchen der Größenverteilung von 10 bis 300 nm, dadurch gekennzeichnet, daß man die Rohprodukte nach den in Anspruch 5 definierten Verfahrensschritten a) und gegebenenfalls b) behandelt.

8. Verfahren zur Herstellung der Naphthalocyanine der Formel I gemäß Anspruch 1 mit isometrischen Teilchen der Größenverteilung von 10 bis 300 nm, dadurch gekennzeichnet, daß man die Rohprodukte nach den in Anspruch 5 definierten Verfahrensschritten c) und gegebenenfalls d) behandelt.

9. Verwendung der Naphthalocyanine gemäß den Ansprüchen 1 bis 6 zur Pigmentierung von Druckfarben, Lacken, Tinten und Kunststoffen.

10. Druckfarben, enthaltend ein oder mehrere der Naphthalocyanine als Pigmente gemäß den Ansprüchen 1 bis 6 und ein polares Bindemittelsystem.

## Claims

1. Naphthalocyanines of the general formula I 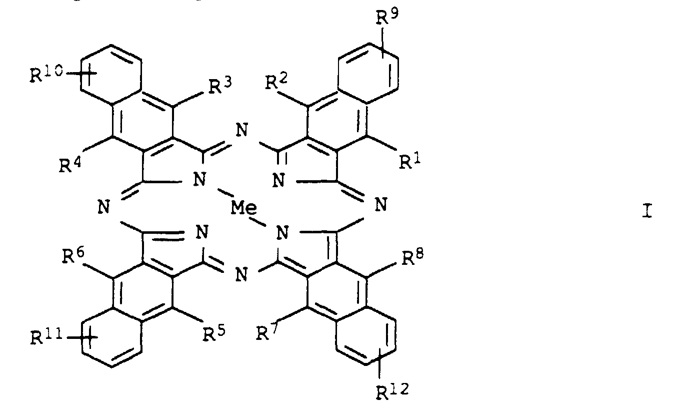 where the variables have the following meanings:
R¹, R², R³, R⁴, R⁵, R⁶, R⁷ and R⁸ are each independently of the others hydrogen, hydroxyl or C₁-C₂₀-alkyl or C₁-C₂₀-alkoxy, whose carbon chains may each be interrupted by from 1 to 4 oxygen atoms in ether function and which may be phenyl-substituted,
R⁹, R¹⁰, R¹¹ and R¹² are each independently of the others hydrogen, halogen or C₁-C₂₀-alkyl or C₁-C₂₀-alkoxy, whose carbon chains may each be interrupted by from 1 to 4 oxygen atoms in ether function,
Me is two hydrogen atoms, two univalent metal atoms or a bivalent metal atom with or without further substituents for valence saturation,
as pigments with isometric particles and a particle size distribution from 10 to 300 nm.

2. Naphthalocyanines of the general formula I as claimed in claim 1 where the variables have the following meanings:
R¹, R², R³, R⁴, R⁵, R⁶, R⁷ and R⁸ are each independently of the others hydrogen, hydroxyl, C₁-C₄-alkyl or C₁-C₂₀-alkoxy,
R⁹, R¹⁰, R¹¹ and R¹² are each hydrogen,
Me is two hydrogen atoms, two lithium atoms, magnesium, zinc, copper, nickel, VO, TiO or AlCl.

3. Naphthalocyanines of the general formula I as claimed in claim 1 where the variables have the following meanings:
R¹, R², R³, R⁴, R⁵, R⁶, R⁷ and R⁸ are each independently of the others hydroxyl or C1-C20-alkoxy,
R⁹, R¹⁰, R¹¹ and R¹² are each hydrogen,
Me is two hydrogen atoms, two lithium atoms, magnesium, zinc, copper, nickel, VO, TiO or AlCl.

4. Naphthalocyanines of the general formula I as claimed in claim 1 where the variables have the following meanings:
R¹, R², R³, R⁴, R⁵, R⁶, R⁷ and R⁸ are each independently of the others C₁-C₁₀-alkoxy,
R⁹, R¹⁰, R¹¹ and R¹² are each hydrogen,
Me is two hydrogen atoms or copper.

5. Naphthalocyanines as claimed in any of claims 1 to 4, obtainable by
a) dry grinding the as-synthesized crude product and if desired
b) then treating the ground product at elevated temperature with a liquid consisting essentially of water and an organic solvent or
c) wet grinding the as-synthesized crude product in a liquid consisting essentially of water and an organic solvent, with or without
d) a subsequent heat treatment of the suspension obtained in c).

6. Naphthalocyanines as claimed in claim 5 wherefor the organic solvent used in step b) or c) is a C₃-C₁₂-alcohol, a C₂-C₃-alkylene glycol mono-C₂-C₄-alkyl ether or tetrahydrofuran.

7. A process for preparing the naphthalocyanines of the formula I as claimed in claim 1 with isometric particles ranging in size from 10 to 300 nm, which comprises treating the crude products by the steps a) and if desired b) defined in claim 5.

8. A process for preparing the naphthalocyanines of the formula I as claimed in claim 1 with isometric particles ranging in size from 10 to 300 nm, which comprises treating the crude products by the steps c) and if desired d) defined in claim 5.

9. A method for pigmenting printing inks, paints and plastics, which comprises using naphthalocyanines as claimed in claim 1.

10. Printing inks comprising one or more of the naphthalocyanines as pigments as set forth in claim 1 and a polar binder system.

## Revendications

1. Naphtalocyanine de formule générale I 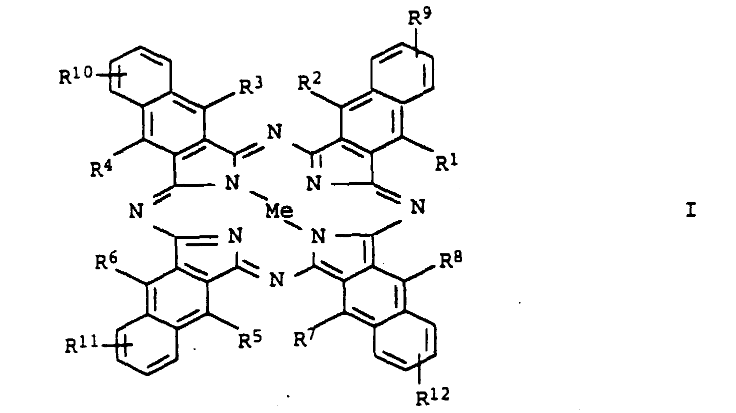 dans laquelle les variables ont la signification suivante :
R¹, R², R³, R⁴, R⁵, R⁶, R⁷ et R⁸ représentent chacun indépendamment l'un de l'autre un atome d'hydrogène, un groupement hydroxy, un groupement alkyle en C₁-C₂₀ ou alcoxy en C₁-C₂₀, dont les chaînes carbonées peuvent à chaque fois être interrompues par 1 à 4 atomes d'oxygène en fonction éther, et peuvent être substituées par un groupement phényle,
R⁹, R¹⁰, R¹¹ et R¹² représentent chacun indépendamment l'un de l'autre un atome d'hydrogène, d'halogène, un groupement alkyle en C₁-C₂₀ ou alcoxy en C₁-C₂₀, dont les chaînes carbonées peuvent à chaque fois être interrompues par 1 à 4 atomes d'oxygène en fonction éther,
Me représente deux atomes d'hydrogène, deux atomes de métal monovalents ou un atome de métal bivalent, portant éventuellement d'autres substituants pour compléter la valence,
en tant que pigments ayant une forme isométrique des particules et une distribution granulométrique de 10-300 nm.

2. Naphtalocyanine de formule générale I selon la revendication 1, dans laquelle les variables ont la signification suivante :
R¹, R², R³, R⁴, R⁵, R⁶, R⁷ et R⁸ représentent chacun indépendamment l'un de l'autre un atome d'hydrogène, un groupement hydroxy, un groupement alkyle en C₁-C₄ ou alcoxy en C₁-C₂₀,
R⁹, R¹⁰, R¹¹ et R¹² représentent un atome d'hydrogène,
Me représente deux atomes d'hydrogène, deux atomes de lithium, du magnésium, du zinc, du cuivre, de nickel, VO, TiO ou AICI.

3. Naphtalocyanine de formule générale I selon la revendication 1, dans laquelle les variables ont la signification suivante :
R¹, R², R³, R⁴, R⁵, R⁶, R⁷ et R⁸ représentent indépendamment les uns des autres un groupement hydroxy ou alcoxy en C₁-C₂₀,
R⁹, R¹⁰, R¹¹ et R¹² représentent un atome d'hydrogène,
Me représente deux atomes d'hydrogène, deux atomes de lithium, du magnésium, du zinc, du cuivre, de nickel, VO, TiO ou AICI.

4. Naphtalocyanine de formule générale I selon la revendication 1, dans laquelle les variables ont la signification suivante :
R¹, R², R³, R⁴, R⁵, R⁶, R⁷ et R⁸ représentent indépendamment les uns des autres un groupement alcoxy en C₁-C₁₀,
R⁹, R¹⁰, R¹¹ et R¹² représentent un atome d'hydrogène,
Me représente deux atomes d'hydrogène ou du cuivre.

5. Naphtalocyanine selon l'une quelconque des revendications 1 à 4, pouvant être obtenues par
a) broyage à sec des produits bruts obtenus lors de la synthèse et éventuellement
b) traitement du produit broyé avec un liquide constitué essentiellement d'eau et d'un solvant organique, avec de la chaleur ou
c) broyage humide des produits bruts obtenus lors de la synthèse dans un liquide essentiellement constitué d'eau et d'un solvant organique et éventuellement
d) traitement par la chaleur de la suspension obtenue en c).

6. Naphtalocyanine selon la revendication 5, pour laquelle on utilise, en tant que solvants organiques dans l'étape b) ou c), des alcools en C₃-C₁₂, des mono(alkyle en C₂-C₄)éthers de (alkylène en C₂-C₃)glycol ou du tétrahydrofurane.

7. Procédé de préparation de naphtalocyanine de formule I selon la revendication 1 ayant une distribution granulométrique des particules isométriques de 10-300 nm, caractérisé en ce que l'on traite les produits bruts selon l'étape de procédé a) définie dans la revendication 5 et éventuellement selon l'étape b).

8. Procédé de préparation de naphtalocyanine de formule I selon la revendication 1 ayant une distribution granulométrique des particules isométriques de 10-300 nm, caractérisé en ce que l'on traite les produits bruts selon l'étape de procédé c) définie dans la revendication 5 et éventuellement selon l'étape d).

9. Utilisation de naphtalocyanines selon l'une quelconque des revendications 1 à 6 pour la pigmentation d'encres d'imprimerie, de laques, d'encres et de matières plastiques.

10. Encres d'imprimerie contenant une ou plusieurs naphtalocyanine en tant que pigment selon l'une quelconque des revendications 1 à 6 et un système liant polaire.
